# EUROPÄISCHE PATENTSCHRIFT

(11) **EP 4 306 734 B1**
(45) Veröffentlichungstag und Bekanntmachung des Hinweises auf die Patenterteilung: **26.02.2025**
(21) Anmeldenummer: 23173568.9
(22) Anmeldetag: 16.05.2023
(51) Int. Cl.: E04B 1/94

(54) **BRANDSCHUTZISOLIERUNG**
FIRE INSULATION
ISOLATION IGNIFUGE

(30) Priorität: 30.06.2022 DE 202022103653 U
(43) Veröffentlichungstag der Anmeldung: 17.01.2024
(73) Patentinhaber: Lethe GmbH, 21079 Hamburg (DE)
(72) Erfinder: DAVID, Thorsten, 22607 Hamburg (DE); BRUMMERLOH, Armin, 28211 Bremen (DE); PETEREIT, Sven, 18507 Grimmen (DE)
(74) Vertreter: Hauck Patentanwaltspartnerschaft mbB

(56) Entgegenhaltungen:
- CN-A- 107 178 682
- CN-A- 110 588 886
- CN-B- 104 121 428
- JP-B1- 7 033 222

## Beschreibung

Die Erfindung betriff eine Brandschutzisolierung zum Einsatz auf einem Schiff umfassend eine Metallwand, aus Metall bestehende Isoliernadeln, die auf der Metallwand befestigt und im Wesentlichen zu dieser senkrecht ausgerichtet sind, Dämmmaterial, welches auf die Isoliernadeln gesteckt ist, sodass das Dämmmaterial an der Metallwand gehalten ist. Die Brandschutzisolierung kommt insbesondere zur Isolierung von Bordwänden, Decks und von Schotten zum Einsatz, wobei Schottisolierungen A60 und A120 vertikal und Deckisolierungen A60 horizontal im Schiff verbaut sind.

Brandschutzisolierungen werden auf Schiffen dazu eingesetzt, dass die Auswirkung von Bränden an Bord räumlich und zeitlich beschränkt wird. Dazu werden Wände eines Schiffes, inklusive Schotten, mit der Brandschutzisolierung versehen. Diese umfasst in der Regel eine Art der Befestigung sowie an der Befestigung gehaltenes Dämmmaterial. Das Dämmmaterial verfügt über einen niedrigen Wärmeleitungskoeffizienten und eine hohe Hitzebeständigkeit. Das Auskleiden von Räumlichkeiten, die für das Überleben der Besetzung und/oder die technische Integrität bzw. Stabilität des Schiffes wichtig sind. Das Dämmmaterial dient dazu, die Brandschutzwirkung durch die Brandschutzisolierung zu erzielen. Beispielsweise werden Maschinenräume an den Wänden bzw. Schotten inklusive Decken mit Dämmmaterial versehen. Ein Brand im Maschinenraum greift danach aufgrund der Brandschutzisolierung nicht bzw. verzögert auf andere Räumlichkeiten über.

Insbesondere für Schiffe, die für den militärischen Gebrauch konzipiert sind, spielt neben den Brandschutzeigenschaften einer Brandschutzisolierung auch deren mechanische Widerstandfähigkeit eine entscheidende Rolle. Nur wenn die Brandschutzisolierung ausreichende Widerstandfähigkeit gegen sogenannten Schock aufweist, kann davon ausgegangen werden, dass die Brandschutzisolierung auch nach einem Treffer z.B. durch einen Torpedo so weit in Takt bleibt, dass zuvor definierte Brandschutzanforderungen erfüllt werden. Das Einhalten der Brandschutzanforderungen nach einem Schockereignis wird durch entsprechende Schocktests sichergestellt. Bei solchen Tests erfährt eine Brandschutzisolierung eine starke Beschleunigung in x-, y- oder z-Richtung. Das Schiff definiert die Richtung: die x-Richtung verläuft vom Heck zum Bug, die y-Richtung von Steuer- nach Backbord und die z-Richtung vom Kiel zum Deck.

Die DE 10 2004 006 321 A1 stellt eine feuerfeste Wand vor. Die feuerfeste Wand besteht aus zwei beabstandeten Wandelementen. Zwischen den Wandelementen befindet sich eine Zwischenlage aus einem nicht-metallischen Material. Zudem sind Zwischenräume mit feuerfestem Material versehen. Mit dieser Anordnung wird das Ziel verfolgt, eine feuerfeste Wand zur Verfügung zu stellen, welche leichter und damit kostengünstiger ist.

Die CN 107 178 682 A beschreibt eine Verbundstruktur zum Wärmeisolieren gegen Strahlung für eine Rohrleitung mit hoher Temperatur. Die Verbundstruktur umfasst eine obere und eine untere halbkreisförmige Struktur mit einer Lage aus Isoliermaterial, und einer geschlossenen Luftschicht sowie eine die Form fixierende Nagelvorrichtung. Die halbkreisförmigen Strukturen umhüllen die Rohrleitung und werden auf der linken und der rechten Seite der Rohrleitung durch Verbindungsstrukturen zusammengehalten. Auch aus Dokument CN110588886 ist eine Brandschutzisolierung nach dem Stand der Technik bekannt.

Ausgehend hiervon liegt der Erfindung die Aufgabe zugrunde, eine Brandschutzisolierung zu schaffen, welche sowohl einen Brandschutz als auch eine hohe mechanische Widerstandsfähigkeit aufweist.

Die Aufgabe wird durch eine Brandschutzisolierung mit den Merkmalen von Anspruch 1 gelöst. Vorteilhafte Ausführungsarten der Brandschutzisolierung sind in Unteransprüchen und in der nachfolgenden Beschreibung angegeben.

Die erfindungsgemäße Brandschutzisolierung zum Einsatz auf einem Schiff umfasst
- eine Metallwand, die ein Deck, ein Schott oder ein Teil der Außenhülle eines Schiffes ist,
- aus Metall bestehende Isoliernadeln, die auf der Metallwand befestigt sind und im Wesentlichen senkrecht zu der Metallwand ausgerichtet sind,
- plattenförmiges Dämmmaterial, welches auf die Isoliernadeln gesteckt ist, sodass das Dämmmaterial an der Metallwand gehalten wird, ist dadurch gekennzeichnet, dass
- die Isoliernadeln einen Durchmesser von kleiner oder gleich 3 mm und im Bereich der Befestigung an der Metallwand eine Verstärkung aufweisen und die Verstärkung eine mit der Isoliernadel verpresste Buchse ist, welche am unteren Ende der Isoliernadel angeordnet ist.

Bei der erfindungsgemäßen Brandschutzisolierung wird plattenförmiges Dämmmaterial an einer Metallwand gehalten. Dazu kommen Isoliernadeln zum Einsatz. Die Metallwand ist im einfachsten Fall eine Platte (auch als "Blech" bezeichnet), die eben und/oder gekrümmt sein kann. Die Metallwand kann Versteifungsprofile aufweisen. Ferner stellt die Metallwand insbesondere ein Deck oder ein Schott dar. Sie kann aber auch Teil der Außenhülle, insbesondere einer Boden- oder Bordwand, sein. Isoliernadeln sind längliche Befestigungsmittel, welche aus Metall gefertigt sind und so an der Metallwand befestigt sind, dass sie sich im Wesentlichen senkrecht von der Wand weg erstrecken. Mit "im Wesentlichen senkrecht" sind Ausrichtungen der Isoliernadeln bezeichnet, die senkrecht zur Wand ausgerichtet sind und von der Senkrechten abweichende Ausrichtungen, die ein Aufstecken des Dämmmaterials auf die Isoliernadeln zulassen. Die Isolationsnadeln können eine zylindrische Form mit kreisrundem Querschnitt aufweisen, sind aber nicht auf eine solche beschränkt. Auch drei- oder andere mehreckige Querschnitte können verwendet werden. Die Isoliernadeln dienen dazu, das Dämmmaterial zu befestigen. Dazu ist das Dämmmaterial auf die Isoliernadeln gesteckt. Das Dämmmaterial besteht in der Regel aus faserartigem oder auch geschäumtem Material mit einer relativ geringen Dichte. Das Dämmmaterial besteht z.B. stein-, glas- oder keramischen Fasern. Häufig ist das Dämmmaterial nicht formstabil. Allerdings ist das Dämmmaterial brandbeständig und weist eine geringe Wärmeleitfähigkeit auf. Es schützt die isolierten Räume somit vor den Auswirkungen eines Feuers. Dadurch, dass das Dämmmaterial auf die Isoliernadeln gesteckt ist, wird es relativ zu der Wand auch bei einer Fahrt des Schiffs an einer möglichst gleichbleibenden Position gehalten. Es gilt dabei zu beachten, dass die Isoliernadeln vorzugsweise eine Länge aufweisen, die sich an der Dicke des Dämmmaterials orientiert, damit sowohl die Optik der Wand nicht gestört wird als auch ein Verletzungsrisiko durch hervorstehende Isoliernadeln gesenkt ist. Die erfindungsgemäße Brandschutzisolierung weist Isoliernadeln auf, welche einen Durchmesser aufweisen, der kleiner oder gleich 3 mm ist, und welche im Bereich der Befestigung an der Metallwand eine Verstärkung aufweisen. Die Wahl eines Durchmessers von maximal 3 mm hat zur Folge, dass der Querschnitt der Isolationsnadeln im Vergleich zu der Fläche des Dämmmaterials relativ gering ist. Dadurch wird in einem Brandfall wenig Wärme über die Isolationsnadeln geleitet. Zudem spart dieser relativ kleine Querschnitt im Vergleich zu größeren Querschnitten Material, sodass Kosten- und Gewichtsvorteile entstehen. In diesem Zusammenhang ist auszuführen, dass der Durchmesser der Isoliernadeln den Ersatzdurchmesser des Querschnitts der Isolationsnadeln bezeichnet. Über den Zusammenhang zwischen quadriertem Radius, der Kreiszahl Pi und der Fläche eines Kreises ergibt sich der Ersatzdurchmesser aus der Fläche des Querschnitts. Bei kreisrunden Querschnitten entspricht der Durchmesser dem Durchmesser des Querschnitts. Die Verstärkung im Bereich der Befestigung stellt sicher, dass eine hohe mechanische Widerstandsfähigkeit vorhanden ist. Untersuchungen der Anmelderin haben ergeben, dass die Verstärkung im Bereich der Befestigung die Schock-Widerstandsfähigkeit stark erhöht, ohne dass der Nadeldurchmesser vergrößert werden muss. Die Verstärkung wird bevorzugt so dimensioniert und platziert, dass sie beim Vorliegen üblicher Schock-Bedingungen, welche z.B. durch einen standardisierten Test simuliert werden, dazu führt, dass auf die Isoliernadeln wirkende mechanische Kräfte aufgenommen werden, ohne dass es zu einem Versagen der Isoliernadeln kommt. Wie weiter unten näher erläutert wird, kann eine Buchse als Verstärkung verwendet werden, welche auf den unteren Teil der Isolationsnadel aufgepresst wird. Aber auch andere Fertigungsverfahren als das Fügen weiterer Bauteile kann zum Einsatz kommen. Es kann durch ein Urform-Verfahren z.B. zusätzliches Material aufgeschweißt sein, durch ein Umform-Verfahren z.B. die Nadel im Bereich der Befestigung gestaucht sein, durch ein Trenn-Verfahren z.B. von einem größeren Rohling die Isolationsnadeln auf den gewünschten Durchmesser abgefräst oder gedreht sein, sodass nur im Bereich der Verstärkung das ursprünglich Mehrmaterial des Rohlings vorhanden ist, durch ein Beschichtungs-Verfahren z.B. eine hochfeste Metallschicht aufgebracht sein und/oder durch ein Verfahren zum Ändern der Stoffeigenschaften z.B. ein Bereich der Isolationsnadel gehärtet sein. Es ist also festzuhalten, dass eine Verstärkung auf vielfältige Weise stattfinden kann.

Gemäß einer Ausführungsart der Erfindung ist der Abstand einer Isolationsnadel jeweils zur nächsten Isolationsnadel gleich oder weniger als 150 mm. Gemäß einer weiteren Ausführungsart ist der Abstand einer Isoliernadel von den Enden oder Stößen des Dämmmaterials gleich oder kleiner als 50 mm. Durch diesen relativ geringen Abstand zwischen den Isoliernadeln wird sichergestellt, dass im Falle einer hohen mechanischen Belastung der Brandschutzisolierung, z.B. durch einen infolge eines Torpedotreffers auftretenden Schock, dennoch gewährleistet ist und, dass das Dämmmaterial weiterhin an der Wand gehalten ist. Weiterhin sind die Abstände der Isoliernadeln im Wesentlichen dennoch so gewählt, dass die über die Isoliernadeln geleitete Wärme im Falle eines Brandes begrenzt bleibt.

Gemäß einer Ausführungsart der Erfindung sind die Isoliernadeln zylindrisch. Die Verwendung von zylindrischen Isoliernadeln mit kreisrundem Querschnitt hat den Vorteil, dass das Rohmaterial als günstiges Stangenmaterial z.B. als Draht beschafft werden kann. Zudem kann ein Stangenmaterial einfacher weiter bearbeitet werden. Die Verstärkung ist eine mit der Isoliernadel verpresste verschweißbare Buchse, welche am unteren Ende der Isoliernadel angeordnet ist. Eine solche Buchse kann als Zukaufteil, z.B. als Rohr, welches auf die passende Buchsenlänge abgesägt wird, beschafft werden. Beispielsweise durch das Erhitzen der Buchse und das Abkühlen der Isolationsnadeln in Kombination mit einer passend gewählten Passung ist es möglich, einen sicheren Halt der Buchse auf der Isoliernadeln zu gewährleisten, ohne weitere Fügemittel verwenden zu müssen. Die Buchse wird am unteren Ende der Isoliernadel, d.h. in der Nähe der Befestigung der Isoliernadeln an der Metallwand, angebracht. In diesem Bereich der Einspannstelle, hier die Verschweißung mit der Schiffswand oder dem Deck, wirken bei einer mechanischen Belastung auf die Brandschutzisolierung aufgrund der Trägheit des Dämmmaterials besonders hohe Belastungen auf die Isoliernadeln.

Gemäß einer Ausführungsart der Erfindung weist die Buchse eine Höhe von maximal 15 mm auf. Die Dimensionierung der Buchse geschieht vorzugsweise in Abhängigkeit der gemäß z.B. eines Schocktests vorliegenden Belastung. Eine Höhe von maximal 15 mm sichert insbesondere, dass sowohl eine Aufnahme der mechanischen Belastung gewährleistet ist, ohne dass es zu einem Versagen kommt, als auch dass die Wärmeleitfähigkeit der Isoliernadeln wie gewünscht erhalten bleibt. Auch eine Kosten- und Bearbeitungsersparnis besteht durch eine Beschränkung der Höhe der Buchse.

Gemäß einer Ausführungsart der Erfindung hat die Buchse einen Durchmesser von maximal 7,5 mm. In ähnlicher Weise wie oben beschrieben wirkt sich eine Beschränkung des Durchmessers und der damit einhergehenden Beschränkung der Wandstärke positiv auf eine Gewichts- und Kostenersparnis aus, ohne die Wärmeleit- oder mechanischen Widerstandseigenschaften negativ zu beeinflussen.

Gemäß einer Ausführungsart der Erfindung weisen die Isoliernadeln an der Befestigungsstelle zur Wand eine Manschette auf, welche einen größeren Durchmesser hat als die Verstärkung. Eine solche Manschette ist in der Regel dünn und tellerförmig ausgeführt. Sie kann an der Isolationsnadeln befestigt sein. Sie kann aber auch an der Buchse befestigt sein. Ferner kann die Manschette ein einteilig mit der Buchse ausgebildeter Flansch oder Bundkragen sein, der z.B. durch Umbördeln hergestellt wird. Die Manschette dient dazu, dass die Isoliernadel einen größeren Auflagebereich auf der Metallwand hat, was insbesondere dazu dient, einen Fügeprozess, wie z.B. Schweißen, positiv zu unterstützen. Außerdem kann eine solche Manschette auch dazu dienen, z.B. für eine zur Verstärkung eingesetzte Buchse einen Endanschlag darzustellen, welcher die Montage vereinfacht.

Gemäß einer Ausführungsart der Erfindung sind die Isoliernadeln in einem quadratischen Raster angeordnet. Die Anordnung der Isoliernadeln in einem quadratischen Raster hat zur Folge, dass die bei einer mechanischen Belastung der Brandschutzisolierung auf die Isoliernadeln übertragenen Kräfte gleichmäßig auf alle Isoliernadeln übertragen werden. Es kann somit auch unter anderem eine sicherheitsrichtlinienkonforme Auslegung im Vorfeld der Montage vorgenommen werden.

Gemäß einer Ausführungsart der Erfindung sind die Isoliernadeln durch Punkt- und/oder Widerstandschweißen an der Metallwand befestigt. Punkt- und Widerstandschweißen sind gebräuchliche Schweißverfahren. Sie erlauben das stoffliche Fügen der Isoliernadeln mit der Metallwand, welche insbesondere eine hohe mechanische Stabilität gewährleistet. Sowohl Punkt- als auch Widerstandschweißen sind in der Handhabung einfach, sodass sich auch für eine Zertifizierung Vorteile ergeben.

Gemäß einer Ausführungsart der Erfindung sind Metallclips auf die Isoliernadeln geklemmt, sodass das Dämmmaterial auf der Metallwand fixiert ist. Durch die Verwendung von Metallclips wird sichergestellt, dass die Positionierung des Dämmmaterials an der Metallwand und sonstiger, etwaiger Zwischenschichten an der Metallwand abgewandten Seite des Dämmmaterials auch im Falle einer mechanischen Belastung, die zumindest teilweise in senkrechter Richtung relativ zur Metallwand wirkt, gewährleistet ist. Die Metallclips sind dazu vorzugsweise als Teller ausgeführt, welche eine im Wesentlichen mittige Bohrung aufweisen. Über die Bohrung werden die Teller auf die Isoliernadeln geschoben. Durch eine Klemmwirkung werden die Clips auf den Isoliernadeln gehalten. Die Verwendung mehrerer Metallclips hat dabei insbesondere den Vorteil, dass höhere mechanische Kräfte aufgenommen werden können. Im Vergleich zu größer und/oder stärker dimensionierten Metallclips ist es dennoch möglich, in der Handhabung und im Einkauf günstige Metallclips zu verwenden, während eine Funktionalität sichergestellt wird, wie sie ansonsten größer und/oder stärker dimensionierte Metallclips erfüllen würden.

Gemäß einer Ausführungsart der Erfindung sind drei Metallclips auf die Isoliernadel geklemmt. Die Verwendung von drei Metallclips ist bevorzugt, weil entsprechende Dämmmaterialdimensionen und -eigenschaften bei der Auslegung der Brandschutzisolierung gewählt worden sind. Auch die Verwendung von weniger oder mehr Metallclips ist bei weiteren Ausführungsarten möglich. Weiterhin können gleichartige Metallclips verwendet werden, sodass der Einkauf und die Montage vereinfacht bleiben.

Gemäß einer Ausführungsart ist am Schott der Einsatz von Dämmmaterial mit einer Dichte von ca. 50 kg/m³ oder 56 kg/m³ in der Fläche und ca. 56 kg/m³ oder 76 kg/m³ an Versteifungsprofilen bevorzugt. Am Deck ist eine Dichte des Dämmmaterials von ca. 56 kg/m³ am Deck in der Fläche und ca. 76 kg/m³ an Versteifungsprofilen bevorzugt. Infolge einer solchen Beschränkung der Dichte des Dämmmaterials wirken insbesondere bei einer mechanischen Belastung auf die Brandschutzisolierung geringere Kräfte auf die Isoliernadeln, als bei höheren Rohdichten der Isolierungen. Dennoch weist das Dämmmaterial eine ausreichende Dichte auf, um die nötigen Isolationseigenschaften zu erfüllen. Im Brandfall kann gewährleistet werden, dass die Brandschutzisolierung ausreichend lange seine Aufgabe erfüllt und das Schiff vor weiteren Folgeschäden bewahrt bleibt.

Gemäß einer Ausführungsart der Erfindung besteht das Dämmmaterial aus mehreren Lagen. Wenn das Dämmmaterial aus mehreren Lagen besteht, können z.B. komplizierte Geometrien der Metallwand - z.B. T-Profile - dennoch mit ausreichendem Dämmmaterial geschützt werden. Weiterhin ist es auch in einem solchen Fall möglich, auf standardisierte Formate des Dämmmaterials zurückgreifen zu können. Außerdem muss zum Erfüllen der geforderten Brandschutzdauer durch den Einsatz mehrerer Lagen nicht auf Dämmmaterial mit einer erhöhten Dichte zurückgegriffen werden, welche nach dem Auftreten einer Schockbelastung zu einer mechanischen Überlastung der Isoliernadeln führen könnte.

Gemäß einer Ausführungsart der Erfindung besteht das Dämmmaterial aus zwei Lagen. Durch die Verwendung von zwei Lagen können vielfältige Geometrien abgedeckt werden, die bei der Konstruktion und Auslegung eines Schiffes auftreten und bei denen die geforderten Brandschutzeigenschaften eingehalten werden müssen. Für viele Ausführungen bieten zwei Lagen einen guten Kompromiss aus den Brandschutzeigenschaften, der verwendbaren Dichte des Dämmmaterials und der Handhabung bei der Produktion

Gemäß einer Ausführungsart der Erfindung besteht das Dämmmaterial aus einer Lage. Die Verwendung lediglich einer Lage hat insbesondere bei der Montage und Handhabung vorteilhafte Eigenschaften. Durch die Wahl einer passenden Stärke des Dämmmaterials kann dennoch eine ausreichende Brandschutzwirkung erzielt werden.

Gemäß einer Ausführungsart der Erfindung weist das Dämmmaterial an Schotten eine Stärke von ca. 100 mm oder 60 mm in der Fläche und ca. 70 mm oder 20 mm an Versteifungsprofilen auf. Gemäß einer Ausführungsart der Erfindung weist das Dämmmaterial am Deck eine Stärke von ca. 50 mm in der Fläche und ca. 20 mm an Versteifungsprofilen auf. Die Wahl dieser Stärken des Dämmmaterials ist dazu in der Lage, typische Anforderungen an die Dauer einer Gewährleistung des Brandschutzes, wie sie von Werften beim Bau von Schiffen gestellt werden, zu erfüllen. Durch die Wahl verschiedener Dämmmaterialstärken an verschiedenen Bereichen des Schiffs werden die an die jeweiligen Bereiche gestellten Anforderungen hinsichtlich des Brandschutzes befriedigt. Die Wahl einer dickeren Dämmmaterialstärke dient dazu, insbesondere die Dauer des Brandschutzes zu verlängern, z.B. bei Brandschutzisolierungen A120 im Vergleich zu Brandschutzisolierungen A60 an Schotten.

Gemäß einer Ausführungsart der Erfindung ist mindestens eine Gewebematte an dem Dämmmaterial angeordnet. Eine oder mehrere Gewebematten können dazu eingesetzt werden, die Brandschutzisolierung noch vielfältiger zu gestalten. Eine Gewebematte kann dazu dienen, zusätzlich Kräfte im Falle einer Schock- oder sonstigen mechanischen Belastung aufzunehmen. Sie dient aber auch dazu, chemische Belastung z.B. durch Säuren, Öl oder zu Korrosion führendem Wasserdampf zu vermeiden. Zum primären Schutz der Metallwand kann eine Gewebematte zwischen Metallwand und Dämmmaterial angebracht sein. Zum primären Schutz des Dämmmaterials kann eine Gewebematte auf der der Metallwand abgewandten Seite des Dämmmaterials angeordnet sein.

Gemäß einer Ausführungsart der Erfindung ist eine Gewebematte auf der der Metallwand abgewandten Seite auf dem Dämmmaterial angeordnet. Die Verwendung einer Gewebematte auf der Seite des Dämmmaterials, die von der Metallwand abgewandt ist, hat insbesondere bei der Montage und Befestigung des Dämmmaterials Vorteile. Die Gewebematte hilft dabei, die Positionierung des Dämmmaterials auch beim Einwirken von mechanischen Belastungen auf die Brandschutzisolierung sicherzustellen. Die Gewebematte ist dazu unter anderem in der Lage, hohe Zugkräfte aufzunehmen. Zudem überdeckt die Gewebematte das Dämmmaterial. Die Gewebematte wirkt sich dadurch auch positiv auf die Brandschutzeigenschaften aus, weil sie z.B. aus einem gegen äußere Einwirkung resistenteren Material als das Dämmmaterial ausgeführt sein kann. Weiterhin ist die Gewebematte mit verschiedenen Farben und Beschichtungen versehbar, welche bspw. dazu beitragen, eine ansprechende Ästhetik an Bord zu gewährleisten.

Gemäß einer Ausführungsart der Erfindung ist die Gewebematte zwischen den am nächsten an der Metallwand befindlichen Metallclips und dem Dämmmaterial angeordnet. Durch die Anordnung der Gewebematte zwischen dem am nächsten an der Wand befindlichen Metallclips und dem Dämmmaterial ist sichergestellt, dass die Gewebematte von den Metallclips an dem Dämmmaterial gehalten ist. Im Falle einer mechanischen Belastung durch Schock kann dadurch ein großer Teil der wirkenden Kräfte von dem Dämmmaterial an die Gewebematte und von dieser an die Metallclips und von diesen an die Isoliernadeln abgegeben werden.

Gemäß einer Ausführungsart der Erfindung ist die Gewebematte mit Aluminiumfolie beschichtet. Die Gewebematte kann mit einer Aluminiumfolie versehen werden, um die vielfältigen Eigenschaften der Gewebematte weiter auszubauen. Die Aluminiumfolie ist besonders unempfindlich gegen Korrosion. Gleichzeitig bietet sich eine hohe Widerstandsfähigkeit gegenüber der Einwirkung von äußeren Einwirkungen. Außerdem hilft sie dabei, das Dämmmaterial gegen das Eindringen von Feuchtigkeit zu sichern. Darüber hinaus kann die Aluminiumfolie als Dampfsperre dienen. Zudem ist die Aluminiumbeschichtung durch übliche Fertigungsverfahren applizierbar, sodass eine entsprechende Beschichtung einfach aufgebracht werden kann und eine günstige Produktion gewährleistet ist.

Gemäß einer Ausführungsart der Erfindung ist die Aluminiumfolie auf der Metallwand abgewandten oder zugewandten Seite angeordnet. Die Positionierung der Aluminiumfolie relativ zu der Metallwand geschieht entsprechend der Spezifikationen, die beim Bau des Schiffes angewandt werden. Eine Positionierung der Aluminiumfolie auf der der Metallwand abgewandten Seite sorgt dafür, dass die Aluminiumfolie von außen sichtbar ist. Für den Schutz des Dämmmaterials vor dem Eindringen von Flüssigkeit ist insbesondere die Positionierung der Aluminiumfolie auf der der Metallwand zugewandten Seite günstig. Weiterhin schützt die Aluminiumfolie in dieser Positionierung das Gewebetuch und das Dämmmaterial gegenüber Wärmestrahlung oder sonstiger Strahlung.

Gemäß einer Ausführungsart der Erfindung besteht die Gewebematte aus Glastuch. Die Verwendung von Glastuch ermöglicht insbesondere, dass die Gewebematte hohe Kräfte aufnehmen kann, weil sie sehr Widerstandsfähig ist. Gleichzeit ermöglicht die Verwendung von Glastuch auch eine Gewichtsersparnis im Vergleich zu anderen Materialien.

Gemäß einer Ausführungsart der Erfindung ist die Gewebematte auf der der Metallwand abgewandten Seite angestrichen ist. Durch einen Anstrich der in einem Raum sichtbare Seite der Gewebematte kann die Ästhetik an Bord den Vorgaben entsprechend sichergestellt werden. Es sind allerdings auch vielfältige funktionale Anstriche umsetzbar, welche z.B. dazu dienen, günstige Anti-Haft-Eigenschaften zu realisieren, die Korrosionsanfälligkeit zu reduzieren oder die Brandschutzeigenschaften zu verbessern.

Gemäß einer Ausführungsart der Erfindung sind auf die Metallclips eine oder mehrere Abdeckkappen gesteckt. Abdeckkappen können dazu verwendet werden, die Isoliernadelenden, welche aus der Brandschutzisolierung herausschauen und somit sicht- als auch berührbar sind, abzudecken. Dies steigert insbesondere die Ästhetik. Durch die Abdeckung der Isoliernadelenden kann aber auch ein Verletzungsrisiko minimiert werden.

Gemäß einer Ausführungsart der Erfindung ist das Dämmmaterial über Versteifungsprofile gelegt, welche sich im Wesentlichen senkrecht von der Metallwand erstrecken. Wände einer Schiffswand oder Schiffsschotte können über Versteifungsprofile verfügen, um die mechanischen Eigenschaften zu verbessern. Wenn solche Wände oder Schotte dennoch eine Brandschutzisolierung erfahren sollen, kann die Brandschutzisolierung über die Versteifungsprofile gelegt werden. Beim Legen der Brandschutzisolierung ist vor allem darauf zu achten, dass es nur zu sehr geringen Luftpolstern im Bereich der Anstöße und Übergänge von Versteifungsprofil zu Metallwand kommt.

Gemäß einer Ausführungsart der Erfindung weist die Metallwand mindestens ein Versteifungsprofil auf, an welchem, wie an der restlichen Metallwand, mittels Isoliernadeln Dämmmaterial gehalten ist, um das Versteifungsprofil zu isolieren. Sofern zur Verstärkung der Schiffshülle sehr große Versteifungsprofile nötig sind, müssen auch diese mit einer Brandschutzisolierung versehen werden. In einem solchen Fall werden die erfindungsgemäßen Bestandteile der Brandschutzisolierung auf das Verstärkungsprofil aufgebracht, so wie es oben für die Metallwand beschrieben ist.

Gemäß einer Ausführungsart der Erfindung sind Stöße des Dämmmaterials mit Glastuchbinde verklebt. An Übergängen oder dem Ende von Wandabschnitten, können Stöße der Brandschutzisolierung sichtbar sein. Solche Stöße, bei denen vor allem das Dämmmaterial sichtbar ist, können durch den Einsatz von Glastuchbinde verklebt werden. Dies erlaubt die Wahrung einer spezifikationsgerechten Ästhetik. Insbesondere wird durch das Verkleben der Stöße wird auch erreicht, dass das Dämmmaterial infolge mechanischer Kräfte nicht von seiner Positionierung an der Wand verschoben wird.

Gemäß einer Ausführungsart der Erfindung sind Stöße der Gewebematte mit Glastuchbinde verklebt. Auch bei der Verwendung einer Gewebematte ist es unter Umständen nötig, ein Überkleben der Stöße durch Glastuchbinde vorzunehmen. Dies hat, wie bereits oben erläutert, insbesondere vorteilhafte Auswirkungen auf die Ästhetik und die mechanische Widerstandsfähigkeit der Brandschutzisolierung.

Gemäß einer weiteren Ausführung der Erfindung wird zur Prüfung der Brandschutzeigenschaften der Brandschutzisolierung die Marine Equipment Directive (MED) 2014/90/EU angewendet. Zudem ist die Brandschutzisolierung so ausgeführt, dass sie die Erfordernisse der MED 2018/773, item No. MED/3.11a. SOLAS 74 as amended, Regulation II-2/3.2 & II-2/9, IMO 2010 FTP Code, IMO MSC/Circ.1120 and IMO MSC.1/Circ.1434 und/oder (EU) 2019/1397, item No. MED/3.11a. SOLAS 74 as amended, Regulation II-2/3.2 & II-2/9, IMO 2010 FTP Code, IMO MSC/Circ.1120 and IMO MSC.1/Circ.1434, IMO MSC.1/Circ.1435 erfüllt. Durch die Erfüllung dieser Erfordernisse ist die Brandschutzisolierung dazu geeignet, den durch Werften im Rahmen einer Ausschreibung gestellten Anforderungen gerecht zu werden.

Die Erfindung wird nachfolgend anhand der anliegenden Zeichnungen von Ausführungsbeispielen näher beschrieben. In den Zeichnungen zeigen:
- Fig. 1: eine Isolationsnadel in einer Seitenansicht;
- Fig. 2: eine Brandschutzisolierung in einer seitlichen Schnittansicht;
- Fig. 3: eine Brandschutzisolierung in einer Ansicht von oben mit einem quadratischen Raster der Isolationsnadeln;
- Fig. 4: eine Brandschutzisolierung mit Versteifungsprofil in einer seitlichen Schnittansicht.
- Fig. 5: eine Brandschutzisolierung in einer seitlichen Schnittansicht bei der das Versteifungsprofil die Metallwand ist.
- Fig. 6: eine Brandschutzisolierung in einer seitlichen Schnittansicht mit zwei Lagen Dämmmaterial bei der das Versteifungsprofil die Metallwand ist.

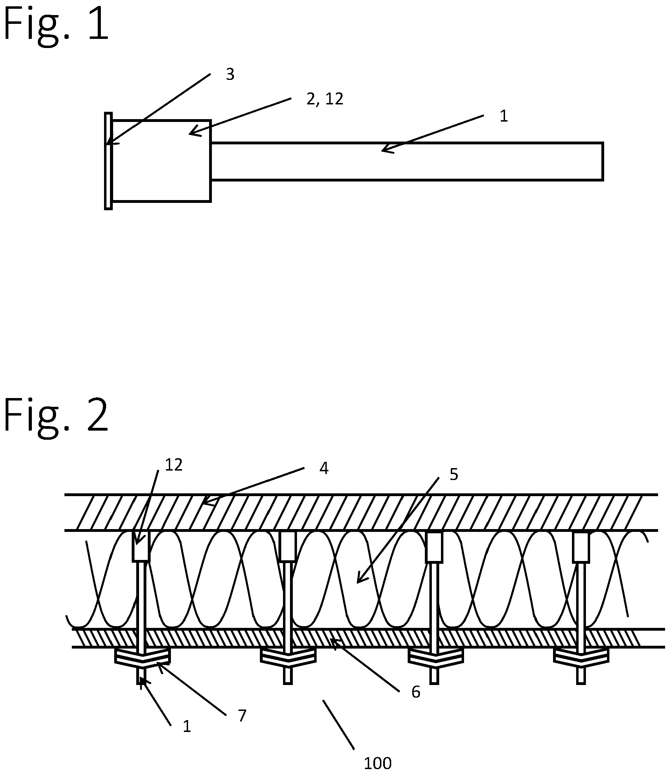

Figur 1 zeigt eine Seitenansicht einer Isoliernadel 1. Die Isoliernadel 1 hat eine zylindrische Form und weist einen Kreisquerschnitt auf. Sie ist aus Metall gefertigt und kann z.B. durch Ablängen üblichen Stangematerials hergestellt werden. An einer Seite weist die Isoliernadel 1 eine Verstärkung 12 auf. In diesem Ausführungsbeispiel ist die Verstärkung 12 als Buchse 2 ausgeführt. Die Buchse ist ein Hohlzylinder, welcher mit der zylindrischen Isoliernadel 1 am unteren Ende verpresst ist. Dazu wird die Buchse 2 bei der Fertigung erwärmt und die Isoliernadel 1 abgekühlt. Anschließend kann die Buchse 2 auf die Isoliernadel 1 geschoben werden und fortan sind beide Bauelemente miteinander gefügt.

Die Buchse 2 ist weniger lang als die Isoliernadel 1. Die Buchse 2 dient dazu, die mechanische Widerstandsfähigkeit der Isoliernadel 1 zu steigern. Die Wandstärke der Buchse 2 wird daher den auf sie wirkenden Kräften entsprechend dimensioniert. Durch die Verwendung einer solchen Buchse 2 ist es möglich, die Isoliernadel 1 an besonders beanspruchten Stellen zu verstärken. Dadurch muss nicht die gesamte Isoliernadel 1 einen entsprechend großen Durchmesser aufweisen, um die Maximalbelastung aufzunehmen. So können Material und dadurch Kosten und Gewicht gespart werden.

Die Isoliernadel 1 weist an dem Ende, an dem die Buchse 2 befestigt ist, auch eine Manschette 3 auf. An der Seite der Manschette 3 wird die Isoliernadel 1 an eine (nicht dargestellte) Metallwand angelegt und anschließend bei der Fertigung einer Brandschutzisolierung mit der Metallwand verschweißt. Die Manschette 3 erleichtert den Schweißprozess. Sie ist z.B. durch umbördeln der Buchse 2 gefertigt.

Figur 2 zeigt eine Metallwand 4, an welcher eine Lage Dämmmaterial 5 gehalten ist. Auf dem Dämmmaterial 5 ist eine Gewebematte 5 gehalten. Im Vergleich zu der Metallwand 4 und der Gewebematte 6 weist das Dämmmaterial 5 eine größere Stärke auf. Die Gewebematte 6 ist auf dem Dämmmaterial 5 und dieses auf der Wand durch einen Metallclip 7 fixiert. Durch eine Klemmwirkung ist der Metallclip 7 auf einer Isoliernadel 1 verklemmt, sodass eine Kraftübertragung von dem Dämmmaterial 5 auf die Gewebemattte 6 auf den Metallclip 7 und die Isoliernadel 1 und somit auch auf die Metallwand 4 übertragen wird, sofern die Brandschutzisolierung 100 eine mechanische Belastung infolge von Schock erfährt. Die Isoliernadeln 1 sind an die Metallwand 4 durch Widerstandschweißen angeschweißt, sodass durch die Dämmwolle 5 entstehende Kräfte nach einer Schock-Belastung auf die Metallwand 4 übertragen werden. Die Isoliernadeln 1 sind so ausgeführt, dass sie nicht viel länger sind, als die kombinierte Dicke von Gewebematte 6 und Dämmmaterial 5 zusammen. Zudem sind die Isoliernadeln 1 im Wesentlichen senkrecht relativ zu der Metallwand 4 ausgerichtet. Es ist zu erkennen, dass die Isoliernadeln 1 über Verstärkungen 12 verfügen. Wie bereits beim Ausführungsbeispiel der Isoliernadel 1 in Figur 1 ausgeführt, ist die Verstärkung 12 dazu geeignet, dass größere Kräfte auf die Isoliernadel 1 wirken können, ohne dass es zu einem Versagen der Isoliernadel 1 kommt.

Schock kann auftreten, wenn ein Schiff, auf dem die Brandschutzisolierung 100 verbaut ist, durch z.B. einen Torpedo getroffen wird. Es ist dargestellt, dass zwei Metallclips 8 auf einer Isoliernadel zum Einsatz kommen. Dadurch ist die Klemmkraft der Metallclips 8 erhöht. Auch werden mehrere Isoliernadeln 1 verwendet, um die übertragenen Kräfte zu verteilen und eine Überlastung zu vermeiden. Das Dämmmaterial 5 ist als Dämmwolle mit einer Dichte von 56 kg/m³ ausgeführt. Die infolge der Trägheit des Dämmmaterials auf die Isoliernadeln 1 wirkenden Kräfte beim Auftreten einer Schockbelastung wird durch eine geringe Dichte des Dämmmaterial 5 reduziert. In einem solchen Fall nimmt auch die Gewebematte 6 einen Teil der Kräfte auf, sodass ein Reißen oder Ablösen von der Metallwand des Dämmmaterials 5 verhindert wird.

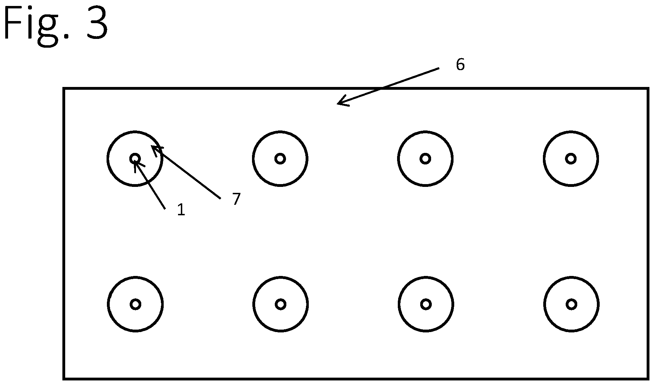

Figur 3 zeigt die Anordnung aus Figur 2 aus einer Ansicht von oben. Es sind die Isoliernadeln 1 und die Metallclips 7 sowie die Gewebematte 6 zu erkennen. Dabei ist ersichtlich, dass die Isoliernadeln in einem quadratischen Raster angeordnet sind. Bei der Fertigung ist darauf zu achten, dass die Isoliernadeln einen Abstand von gleich oder weniger als 150 mm aufweisen.

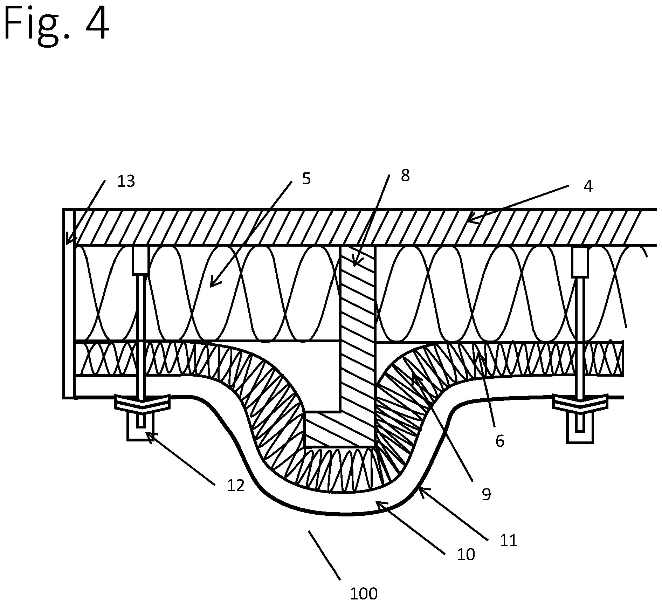

Figur 4 zeigt die Brandschutzisolierung 100 in einer Schnittansicht von der Seite. Die Metallwand 4 weist ein Versteifungsprofil 8 auf. Das Versteifungsprofil 8 unterbricht die Schicht aus Dämmmaterial 5. Das Versteifungsprofil 8 ist dafür mit einer zweite Lage Dämmmaterial 9 abgedeckt. Dadurch wird das Versteifungsprofil 8 ebenfalls isoliert. Die zweite Lage Dämmmaterial 9 weist eine höhere Dichte und eine geringe Dicke als die erste Lage des Dämmmaterials 5 auf. Über der zweiten Lage des Dämmmaterials 9 ist eine Gewebematte 10 angeordnet. Die Gewebematte 10 weist eine Aluminiumfolie 11 auf der Außenseite auf, welche von der Metallwand 4 abgewandt ist. Die Aluminiumfolie dient als Dampfschutz und verhindert das Eindringen von Feuchtigkeit in das Dämmmaterial 5, 9. Über die Enden der Isoliernadeln 1 sind Abdeckkappen 12 geschoben, um ein Verletzungsrisiko zu minimieren und um die Ästhetik ansprechend zu gestalten. Die Stöße der Gewebematte 11 und der beiden Dämmmaterialien 5, 9 sind mit einer Glastuchbinde 13 abgedeckt. Dadurch wird ein Verrutschen verhindert, sowie ein Eindringen von Feuchtigkeit oder sonstiger Verunreinigung gesichert.

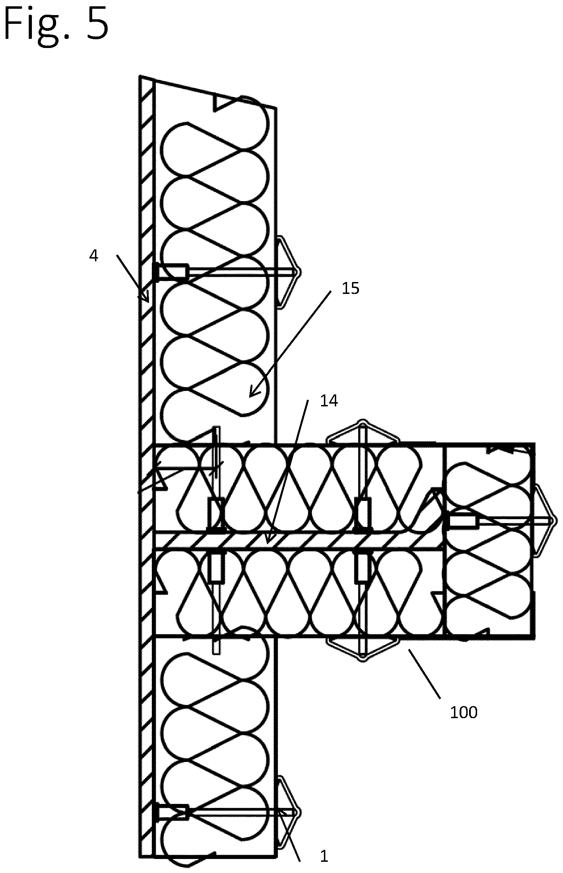

Figur 5 zeigt eine Anordnung, bei der ein Versteifungsprofil 14 auch ein isoliert ist. In diesem Fall werden die plattenförmigen Dämmmaterialien 15 sowie die Isoliernadeln anders auf den Metallwänden 4, 14 angeordnet. Es liegen sowohl auf der ein Versteifungsprofil darstellenden Metallwand 14 als auch auf der restlichen Metallwand 5 Platten des Dämmmaterials 15 flächig auf. Auf diese Weise kann das Dämmmaterial 15 eine größere Dicke aufweisen als bei der in Figur 5 dargestellten Anordnung. So wird sichergestellt, dass die Brandschutzisolierung 100 für eine längere Dauer die Brandschutzanforderungen erfüllt. Gleichzeitig muss dazu dennoch kein Dämmmaterial 15 mit einer erhöhten Dichte verwendet werden. Eine erhöhte

Dichte könnte im Falle einer Schockbelastung zu einer mechanischen Überlastung der Isoliernadeln 1 führen. Es ist darauf zu achten, dass Stöße des Dämmmaterials 15 durch Isoliernadeln 1 miteinander, wie dargestellt verbunden sind.

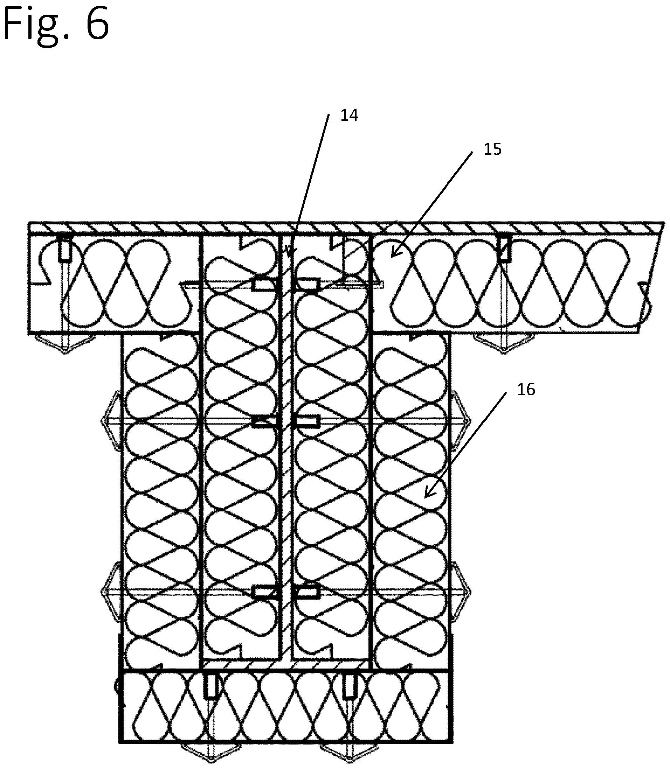

Figur 6 stellt eine ähnliche Anordnung wie in Figur 6 dar. Um noch größere Dicken des plattenförmiges Dämmmaterial 16 zu ermöglichen, ohne dessen Dichte erhöhen zu müssen, werden an Versteifungsprofil 14 zwei Lagen, plattenförmiges Dämmmaterial 16 verwendet. Durch diesen Aufbau sind selbst an den Stellen der dünnsten Stärke des Dämmmaterials die nötigen Mindestanforderungen erfüllt, z.B. von 70 mm an den Außenbereichen des Querträgers des als Versteifungsprofil eingesetzten T-Trägers.

### Bezugszeichenliste

- 1: Isolationsnadel
- 2: Buchse
- 3: Manschette
- 4: Metallwand
- 5: Dämmmaterial
- 6: Gewebematte
- 7: Metallclip
- 8: Versteifungsprofil
- 9: Zweite Lage Dämmmaterial
- 10: Gewebematte mit Aluminiumfolie
- 11: Aluminiumfolie
- 12: Abdeckkappe
- 13: Glastuchbinde
- 14: Versteifungsprofil mit Brandschutzisolierung
- 15: Plattenförmiges Dämmmaterial
- 16: Zweilagiges, plattenförmiges Dämmmaterial
- 100: Brandschutzisolation

## Patentansprüche

1. Brandschutzisolierung zum Einsatz auf einem Schiff umfassend
• eine Metallwand (4), die ein Deck, ein Schott oder ein Teil der Außenhülle eines Schiffes ist,
• aus Metall bestehende Isoliernadeln (1), die auf der Metallwand (4) befestigt und im Wesentlichen zur der Metallwand senkrecht ausgerichtet sind,
• plattenförmiges Dämmmaterial (5), welches auf die Isoliernadeln (1) gesteckt ist, sodass das Dämmmaterial an der Metallwand gehalten ist,
**dadurch gekennzeichnet, dass**
• die Isoliernadeln (1) einen Durchmesser von kleiner oder gleich 3 mm aufweisen,
• die Isoliernadeln (1) im Bereich der Befestigung an der Metallwand (4) eine Verstärkung aufweisen,
• wobei die Verstärkung eine mit der Isoliernadel (1) verpresste Buchse (2) ist, welche am unteren Ende der Isoliernadel (1) angeordnet ist.

2. Brandschutzisolierung nach Anspruch 1, bei der der Abstand einer Isoliernadel (1) jeweils zur nächsten Isoliernadel gleich oder weniger als 150 mm ist.

3. Brandschutzisolierung nach Anspruch 1 oder 2, bei der der Abstand einer Isoliernadel (1) von den Enden oder Stößen des Dämmmaterials (5) gleich oder kleiner als 50 mm ist.

4. Brandschutzisolierung nach einem der Ansprüche 1 bis 3, bei der die Isoliernadeln (1) zylindrisch sind.

5. Brandschutzisolierung nach einem der Ansprüche 1 bis 4, bei der die Buchse (2) eine Höhe von maximal 15 mm aufweist.

6. Brandschutzisolierung nach Anspruch 4 oder 5, bei der die Buchse (2) einen Durchmesser von maximal 7,5 mm hat.

7. Brandschutzisolierung nach einem der Ansprüche 1 bis 6, bei der die Isoliernadeln (1) an der Befestigungsstelle zur Wand (4) eine Manschette (3) aufweisen, welche einen größeren Durchmesser hat als die Verstärkung.

8. Brandschutzisolierung nach einem der Ansprüche 1 bis 7, bei der die Isoliernadeln (1) in einem quadratischen Raster angeordnet sind.

9. Brandschutzisolierung nach einem der Ansprüche 1 bis 8, bei der die Isoliernadeln (1) durch Punkt- und/oder Widerstandschweißen an der Metallwand (4) befestigt sind.

10. Brandschutzisolierung nach einem der Ansprüche 1 bis 9, bei der ein oder mehr Metallclips (7) auf die Isoliernadeln (1) geklemmt sind, sodass das Dämmmaterial (5) auf der Metallwand fixiert ist.

11. Brandschutzisolierung nach einem der Ansprüche 10, bei der auf den obersten Metallclip (7) eine oder mehrere Abdeckkappen (12) gesteckt sind.

12. Brandschutzisolierung nach Anspruch 10 oder 11, bei der drei Metallclips (7) auf die Isoliernadel (1) geklemmt sind.

13. Brandschutzisolierung nach einem der Ansprüche 1 bis 12, bei der die Dichte des Dämmmaterials (5) kleiner oder gleich 76 kg/m³ ist.

14. Brandschutzisolierung nach einem der Ansprüche 1 bis 13, bei der die Dichte des Dämmmaterials (5) kleiner oder gleich 56 kg/m³ ist.

15. Brandschutzisolierung nach einem der Ansprüche 1 bis 14, bei der das Dämmmaterial (5, 9) aus mehreren Lagen besteht.

16. Brandschutzisolierung nach einem der Ansprüche 1 bis 15, bei der das Dämmmaterial (5, 9) aus zwei Lagen besteht.

17. Brandschutzisolierung nach einem der Ansprüche 1 bis 16, bei der das Dämmmaterial (5) aus einer Lage besteht.

18. Brandschutzisolierung nach einem der Ansprüche 1 bis 17, bei der das Dämmmaterial (5) eine Stärke von kleiner oder gleich 100 mm aufweist.

19. Brandschutzisolierung nach einem der Ansprüche 1 bis 18, bei der mindestens eine Gewebematte an dem Dämmmaterial (5) angeordnet ist.

20. Brandschutzisolierung nach einem der Ansprüche 1 bis 19, bei der auf der der Metallwand (4) abgewandten Seite eine Gewebematte (10) auf dem Dämmmaterial (5) angeordnet ist.

21. Brandschutzisolierung nach Anspruch 20, bei dem die Gewebematte (10) zwischen den am nächsten an der Metallwand (4) befindlichen Metallclips (7) und dem Dämmmaterial (5) angeordnet ist.

22. Brandschutzisolierung nach Anspruch 20 oder 21, bei der die Gewebematte (10) mit Aluminiumfolie beschichtet ist.

23. Brandschutzisolierung nach Anspruch 22, bei der die Aluminiumfolie auf der Metallwand (4) abgewandten oder zugewandten Seite angeordnet ist.

24. Brandschutzisolierung nach einem der Ansprüche 20 bis 24, bei der die Gewebematte aus Glastuch besteht.

25. Brandschutzisolierung nach einem der Ansprüche 19 bis 24, bei der die Gewebematte (10) auf der der Metallwand (4) abgewandten Seite angestrichen ist.

26. Brandschutzisolierung nach einem der Ansprüche 1 bis 25, bei der das Dämmmaterial (5) und das Gewebetuch über Versteifungsprofile (14) gelegt sind, welche sich im Wesentlichen senkrecht von der Metallwand (4) erstrecken.

27. Brandschutzisolierung nach einem der Ansprüche 1 bis 26, bei der die Metallwand mindestens ein Versteifungsprofil (14) aufweist, an welchem, wie an der restlichen Metallwand (4), mittels Isoliernadeln (1) Dämmmaterial (5) gehalten ist, um das Versteifungsprofil (14) zu isolieren.

28. Brandschutzisolierung nach einem der Ansprüche 1 bis 27, bei der Stöße des Dämmmaterials (5) mit Glastuchbinde (13) verklebt sind.

29. Brandschutzisolierung nach einem der Ansprüche 19 bis 28, bei der Stöße der Gewebematte (10) mit Glastuchbinde (13) verklebt sind.

## Claims

1. Fire insulation for use on a ship, comprising
• a metal wall (4) which is a deck, a bulkhead or a part of the outer shell of a ship,
• insulation pins (1) consisting of metal, which are fastened on the metal wall (4) and are substantially aligned vertically to the metal wall,
• plate-shaped insulation material (5) which is placed on the insulation pins (1) so that the insulation material is held on the metal wall,
**characterized in that**
• the insulation pins (1) have a diameter of less than or equal to 3 mm,
• the insulation pins (1) have reinforcement in the region of the fastening to the metal wall (4),
• wherein the reinforcement is a bushing (2) compressed with the insulation pin (1), which is arranged at the lower end of the insulation pin (1).

2. The fire insulation according to Claim 1, in which the distance of one insulation pin (1) in each case from the next insulation pin is equal to or less than 150 mm.

3. The fire insulation according to Claim 1 or 2, in which the distance of one insulation pin (1) from the ends or joints of the insulation material (5) is equal to or less than 50 mm.

4. The fire insulation according to one of Claims 1 to 3, in which the insulation pins (1) are cylindrical.

5. The fire insulation according to one of Claims 1 to 4, in which the bushing (2) has a maximum height of 15 mm.

6. The fire insulation according to Claim 4 or 5, in which the bushing (2) has a maximum diameter of 7.5 mm.

7. The fire insulation according to one of Claims 1 to 6, in which the insulation pins (1) have a sleeve (3) at the fastening point to the wall (4), which has a larger diameter than the reinforcement.

8. The fire insulation according to one of Claims 1 to 7, in which the insulation pins (1) are arranged in a square grid.

9. The fire insulation according to one of Claims 1 to 8, in which the insulation pins (1) are fastened to the metal wall (4) by spot-welding and/or resistance welding.

10. The fire insulation according to one of Claims 1 to 9, in which one or more metal clips (7) are clamped onto the insulation pins (1) so that the insulation material (5) is fixed on the metal wall.

11. The fire insulation according to one of Claims 10, in which one or more cover caps (12) are placed on the top metal clip (7).

12. The fire insulation according to Claim 10 or 11, in which three metal clips (7) are clamped onto the insulation pin (1).

13. The fire insulation according to one of Claims 1 to 12, in which the density of the insulation material (5) is less than or equal to 76 kg/m³.

14. The fire insulation according to one of Claims 1 to 13, in which the density of the insulation material (5) is less than or equal to 56 kg/m³.

15. The fire insulation according to one of Claims 1 to 14, in which the insulation material (5, 9) consists of multiple layers.

16. The fire insulation according to one of Claims 1 to 15, in which the insulation material (5, 9) consists of two layers.

17. The fire insulation according to one of Claims 1 to 16, in which the insulation material (5) consists of one layer.

18. The fire insulation according to one of Claims 1 to 17, in which the insulation material (5) has a thickness of less than or equal to 100 mm.

19. The fire insulation according to one of Claims 1 to 18, in which at least one fabric mat is arranged on the insulation material (5).

20. The fire insulation according to one of Claims 1 to 19, in which a fabric mat (10) is arranged on the insulation material (5) on the side facing away from the metal wall (4).

21. The fire insulation according to Claim 20, in which the fabric mat (10) is arranged between the metal clips (7) closest to the metal wall (4) and the insulation material (5).

22. The fire insulation according to Claim 20 or 21, in which the fabric mat (10) is coated with aluminum foil.

23. The fire insulation according to Claim 22, in which the aluminum foil is arranged on the side facing away from or facing the metal wall (4).

24. The fire insulation according to one of Claims 20 to 24, in which the fabric mat consists of glass cloth.

25. The fire insulation according to one of Claims 19 to 24, in which the fabric mat (10) is painted on the side facing away from the metal wall (4).

26. The fire insulation according to one of Claims 1 to 25, in which the insulation material (5) and the fabric cloth are placed over stiffening profiles (14) which extend substantially vertically from the metal wall (4).

27. The fire insulation according to one of Claims 1 to 26, in which the metal wall has at least one stiffening profile (14), on which, like on the rest of the metal wall (4), insulation material (5) is held by means of insulation pins (1) in order to insulate the stiffening profile (14).

28. The fire insulation according to one of Claims 1 to 27, in which joints of the insulation material (5) are glued with glass cloth constructions (13).

29. The fire insulation according to one of Claims 19 to 28, in which joints of the fabric mat (10) are glued with glass cloth constructions (13).

## Revendications

1. Isolation ignifuge destinée à être utilisée sur un vaisseau, comportant
• une paroi métallique (4) consistant en un pont, une cloison ou une partie de la coque d'un vaisseau,
• des aiguilles d'isolation (1) constituées de métal, lesquelles sont fixées sur la paroi métallique (4) et orientées essentiellement perpendiculairement à la paroi métallique,
• un matériau isolant (5) en forme de plaque, lequel est placé sur les aiguilles d'isolation (1), de telle façon que le matériau isolant est maintenu sur la paroi métallique,
**caractérisé en ce que**
• les aiguilles d'isolation (1) présentent un diamètre inférieur ou égal à 3 mm,
• les aiguilles d'isolation (1) présentent un renforcement dans la région de la fixation de la paroi métallique (4),
• dans laquelle le renforcement est une douille (2) comprimée avec l'aiguille d'isolation (1), laquelle est disposée à l'extrémité inférieure de l'aiguille d'isolation (1).

2. Isolation ignifuge selon la revendication 1, dans laquelle l'espacement d'une aiguille d'isolation (1) respectivement par rapport à l'aiguille d'isolation suivante est égal ou inférieur à 150 mm.

3. Isolation ignifuge selon la revendication 1 ou 2, dans laquelle l'espacement d'une aiguille d'isolation (1) par rapport aux extrémités ou jointures du matériau isolant (5) est égal ou inférieur à 50 mm.

4. Isolation ignifuge selon l'une des revendications 1 à 3, dans laquelle les aiguille d'isolation (1) sont cylindriques.

5. Isolation ignifuge selon l'une des revendications 1 à 4, dans laquelle la douille (2) présente une hauteur maximale de 15 mm.

6. Isolation ignifuge selon la revendication 4 ou 5, dans laquelle la douille (2) présente un diamètre maximal de 7,5 mm.

7. Isolation ignifuge selon l'une des revendications 1 à 6, dans laquelle les aiguilles d'isolation (1) présentent une manchette (3) au niveau du point de fixation au mur (4), laquelle présente un plus grand diamètre que le renforcement.

8. Isolation ignifuge selon l'une des revendications 1 à 7, dans laquelle les aiguilles d'isolation (1) sont disposées dans un grille quadratique.

9. Isolation ignifuge selon l'une des revendications 1 à 8, dans laquelle les aiguille d'isolation (1) sont fixées à la paroi métallique (4) par soudage par points et/ou par soudage par résistance.

10. Isolation ignifuge selon l'une des revendications 1 à 9, dans laquelle un ou plusieurs clips métalliques (7) sont serrés sur les aiguilles d'isolation (1), de manière à fixer le matériau isolant (5) sur la paroi métallique.

11. Isolation ignifuge selon l'une des revendication 10, dans laquelle un ou plusieurs clapets de recouvrement (12) sont placés sur le clip métallique (7) supérieur.

12. Isolation ignifuge selon la revendication 10 ou 11, dans laquelle trois clips métalliques (7) sont serrés sur l'aiguille d'isolation (1).

13. Isolation ignifuge selon l'une des revendications 1 à 12, dans laquelle la densité du matériau isolant (5) est inférieure ou égale à 76 kg/m³.

14. Isolation ignifuge selon l'une des revendications 1 à 13, dans laquelle la densité du matériau isolant (5) est inférieure ou égale à 56 kg/m³.

15. Isolation ignifuge selon l'une des revendications 1 à 14, dans laquelle le matériau isolant (5, 9) est constitué de plusieurs couches.

16. Isolation ignifuge selon l'une des revendications 1 à 15, dans laquelle le matériau isolant (5, 9) est constitué de deux couches.

17. Isolation ignifuge selon l'une des revendications 1 à 16, dans laquelle le matériau isolant (5, 9) est constitué d'une couche.

18. Isolation ignifuge selon l'une des revendications 1 à 17, dans laquelle le matériau isolant (5) présente une épaisseur inférieure ou égale à 100 mm.

19. Isolation ignifuge selon l'une des revendications 1 à 18, dans laquelle au moins un tapis de tissu est disposé sur le matériau isolant (5).

20. Isolation ignifuge selon l'une des revendications 1 à 19, dans laquelle un tapis de tissu (10) est disposé sur le matériau isolant (5) sur le côté opposé à la paroi métallique (4).

21. Isolation ignifuge selon la revendication 20, dans lequel le tapis de tissu (10) est disposé entre les clips métalliques (7) les plus proches de la paroi métallique (4) et le matériau isolant (5).

22. Isolation ignifuge selon la revendication 20 ou 21, dans laquelle le tapis de tissu (10) est revêtu d'une feuille d'aluminium.

23. Isolation ignifuge selon la revendication 22, dans laquelle la feuille d'aluminium est disposée sur le côté opposé à la paroi métallique (4) ou sur le côté tourné vers celle-ci.

24. Isolation ignifuge selon l'une des revendications 20 à 24, dans laquelle le tapis de tissu est constitué d'un tissu de verre.

25. Isolation ignifuge selon l'une des revendications 19 à 24, dans laquelle le tapis de tissu (10) est peint sur le côté opposé à la paroi métallique (4).

26. Isolation ignifuge selon l'une des revendications 1 à 25, dans laquelle le matériau isolant (5) et le tapis de tissu sont posés sur des profilés de rigidification (14), lesquels s'étendent essentiellement perpendiculairement à partir de la paroi métallique (4).

27. Isolation ignifuge selon l'une des revendications 1 à 26, dans laquelle le paroi métallique présente au moins un profilé de rigidification (14), sur lequel, comme sur le reste de la paroi métallique (4), du matériau isolant (5) est maintenu à l'aide d'aiguilles d'isolation (1), afin d'isoler le profilé de rigidification (14).

28. Isolation ignifuge selon l'une des revendications 1 à 27, dans laquelle des jointures du matériau isolant (5) sont encollées avec une bande de tissu de verre (13).

29. Isolation ignifuge selon l'une des revendications 19 à 28, dans laquelle des jointures du tapis de tissu (10) sont encollées avec une bande de tissu de verre (13).
